# FASCICULE DE BREVET EUROPEEN

(11) **EP 2 694 612 B1**
(45) Date de publication et mention de la délivrance du brevet: **19.04.2017**
(21) Numéro de dépôt: 12714762.7
(22) Date de dépôt: 09.03.2012
(51) Int. Cl.: C09K 3/30, C09K 5/04, C08J 9/14, C08J 9/12, C11D 7/50, C11D 7/06

(54) **COMPOSITIONS COMPRENANT DU 3,3,3-TRIFLUOROPROPENE ET DE L'AMMONIAC**
ZUSAMMENSETZUNGEN MIT 3,3,3-TRIFLUORPROPEN UND AMMONIAK
COMPOSITIONS COMPRISING 3,3,3-TRIFLUOROPROPENE AND AMMONIA

(30) Priorité: 08.04.2011 FR 1153071
(43) Date de publication de la demande: 12.02.2014
(73) Titulaire: ARKEMA FRANCE, 92705 Colombes Cedex (FR)
(72) Inventeur: RACHED, Wissam, F-69630 Chaponost (FR); BOUTIER, Jean-Christophe, F-69600 Oullins (FR)
(74) Mandataire: Dang, Doris
(86) Numéro de dépôt international: PCT/FR2012/050499
(87) Numéro de publication internationale: WO 2012/136911

(56) Documents cités:
- WO-A2-2007/126414
- US-A1- 2008 069 177

## Description

### DOMAINE DE L'INVENTION

La présente invention concerne des compositions comprenant du 3,3,3-trifluoropropène et leur utilisation, notamment en tant que fluides de transfert de chaleur.

### ARRIERE-PLAN TECHNIQUE

Les fluides à base de composés fluorocarbonés sont largement utilisés dans les systèmes de transfert de chaleur par compression de vapeur, notamment les dispositifs de climatisation, de pompe à chaleur, de réfrigération ou de congélation. Ces dispositifs ont en commun de reposer sur un cycle thermodynamique comprenant la vaporisation du fluide à basse pression (dans laquelle le fluide absorbe de la chaleur) ; la compression du fluide vaporisé jusqu'à une pression élevée ; la condensation du fluide vaporisé en liquide à pression élevée (dans laquelle le fluide rejette de la chaleur) ; et la détente du fluide pour terminer le cycle.

Le choix d'un fluide de transfert de chaleur (qui peut être un composé pur ou un mélange de composés) est dicté d'une part par les propriétés thermodynamiques du fluide, et d'autre part par des contraintes supplémentaires. Ainsi, un critère particulièrement important est celui de l'impact du fluide considéré sur l'environnement. En particulier, les composés chlorés (chlorofluorocarbures et hydrochlorofluorocarbures) présentent le désavantage d'endommager la couche d'ozone. On leur préfère donc désormais généralement les composés non chlorés tels que les hydrofluorocarbures, les fluoroéthers et les fluorooléfines.

Il est toutefois nécessaire de mettre au point d'autres fluides de transfert de chaleur présentant un potentiel de réchauffement global (GWP) inférieur à celui des fluides de transfert de chaleur actuellement utilisés, et présentant des performances équivalentes ou améliorées.

L'utilisation de l'ammoniac en tant que fluide de transfert de chaleur est connue. Toutefois un certain nombre de problèmes sont associés à ce composé : une température de sortie de compresseur très élevée par rapport aux hydrofluorocarbures ; une absence de retour d'huile et l'obligation d'installer un séparateur d'huile ; une charge totale autorisée parfois limitée en raison de la toxicité du produit.

Le document US 2008/0069177 décrit un grand nombre de mélanges de composés de transfert de chaleur, et notamment des mélanges comprenant du 3,3,3-trifluoropropène (HFO-1243zf) ainsi que d'autres mélanges comprenant de l'ammoniac. Ces derniers sont plus précisément : une composition binaire 1,2,3,3,3-pentafluoropropène (HFO-1225ye) / ammoniac; deux compositions ternaires difluorométhane (HFC-32) / ammoniac / HFO-1225ye et HFO-1225ye / pentafluoroéthane (HFC-125) / ammoniac ; et trois compositions quaternaires HFC-32 / ammoniac / HFO-1225ye / CF₃l, HFC-32 / ammoniac / 2,3,3,3-tétrafluoropropéne (HFO-1234yf) / CF₃l et HFC-1225ye / HFC-32 / HFC-125 / ammoniac.

Le document WO 2008/033570 contient un enseignement similaire à celui du document US 2008/0069177.

Le document WO2007/126414 fait état principalement de compositions destinées à être utilisées dans des systèmes de transfert de chaleur comprenant de l'ammoniac et soit le 1,2,3,3,3-pentafiuoropropène (HFO-1225ye), soit le 2,3,3,3-tétrafluoropropène (HFO-1234yf). D'autres compositions sont également mentionnées dans ce document, dont certaines comprennent le 3,3,3-trifluoropropène (HFO-1243zf) et au moins un autre composé.

Toutefois, il existe encore un besoin de mettre au point d'autres fluides de transfert de chaleur présentant un GWP relativement faible, et susceptibles de remplacer les fluides de transfert de chaleur usuels.

En particulier, il est souhaitable de mettre au point d'autres fluides de transfert de chaleur à bas GWP qui soient quasi-azéotropiques voire azéotropiques et / ou qui présentent de bonnes performances énergétiques par rapport à des fluides de transfert de chaleur usuels (tel que le R404A ou le R410A).

### RESUME DE L'INVENTION

L'invention concerne en premier lieu une composition comprenant du 3,3,3-trifluoropropène et de l'ammoniac.

Selon un mode de réalisation, le 3,3,3-trifluoropropène et l'ammoniac représentent au moins 95 %, de préférence au moins 99 %, de manière plus particulièrement préférée au moins 99,9 % de la composition.

Selon un mode de réalisation, la composition comprend :
- de 10 à 70 % d'ammoniac et de 30 à 90 % de 3,3,3-trifluoropropène ;
- de préférence de 20 à 50 % d'ammoniac et de 50 à 80 % de 3,3,3-trifluoropropène, ou de 15 à 35 % d'ammoniac et de 65 à 85 % de 3,3,3-trifluoropropène ;
- de manière plus particulièrement préférée de 20 à 35 % d'ammoniac et de 65 à 80 % de 3,3,3-trifluoropropène ; et
- de manière tout particulièrement préférée de 25 à 35 % d'ammoniac et de 65 à 75 % de 3,3,3-trifluoropropène.

L'invention concerne également l'utilisation de la composition selon l'invention, en tant que fluide de transfert de chaleur.

Selon un mode de réalisation, la composition est quasi-azéotropique, de préférence est azéotropique.

L'invention concerne également une composition de transfert de chaleur, comprenant la composition selon l'invention ainsi qu'un ou plusieurs additifs choisis parmi les lubrifiants, les stabilisants, les tensioactifs, les agents traceurs, les agents fluorescents, les agents odorants, les agents de solubilisation et leurs mélanges.

L'invention concerne également une installation de transfert de chaleur comprenant un circuit de compression de vapeur contenant une composition selon l'invention en tant que fluide de transfert de chaleur ou contenant une composition de transfert de chaleur telle que décrite ci-dessus.

Selon un mode de réalisation, l'installation est choisie parmi les installations mobiles ou stationnaires de chauffage par pompe à chaleur, de climatisation, de réfrigération, de congélation et les cycles de Rankine, et notamment parmi les installations de climatisation automobile.

L'invention concerne également un procédé de chauffage ou de refroidissement d'un fluide ou d'un corps au moyen d'un circuit de compression de vapeur contenant un fluide de transfert de chaleur, ledit procédé comprenant successivement l'évaporation du fluide de transfert de chaleur, la compression du fluide de transfert de chaleur, la condensation du fluide de chaleur et la détente du fluide de transfert de chaleur, dans lequel le fluide de transfert de chaleur est une composition selon l'invention.

Selon un mode de réalisation, ce procédé est un procédé de refroidissement d'un fluide ou d'un corps, dans lequel la température du fluide ou du corps refroidi est de -15°C à 15°C, et de préférence de -10°C à 10°C, de manière plus particulièrement préférée de -5°C à 5°C ; ou est un procédé de chauffage d'un fluide ou d'un corps, dans lequel la température du fluide ou du corps chauffé est de 30°C à 90°C, et de préférence de 35°C à 60°C, de manière plus particulièrement préférée de 40°C à 50°C.

Selon un mode de réalisation, ce procédé est un procédé de refroidissement d'un fluide ou d'un corps, dans lequel la température du fluide ou du corps refroidi est de -40°C à -10°C, et de préférence de -35°C à -25°C, de manière plus particulièrement préférée de -30°C à -20°C.

Selon un mode de réalisation, ce procédé est un procédé de chauffage d'un fluide ou d'un corps, dans lequel la température du fluide ou du corps chauffé est supérieure à 90°C, de préférence supérieure ou égale à 100°C ou supérieure ou égale à 110°C, et de préférence inférieure ou égale à 120°C.

L'invention concerne également un procédé de réduction de l'impact environnemental d'une installation de transfert de chaleur comprenant un circuit de compression de vapeur contenant un fluide de transfert de chaleur initial, ledit procédé comprenant une étape de remplacement du fluide de transfert de chaleur initial dans le circuit de compression de vapeur par un fluide de transfert final, le fluide de transfert final présentant un GWP inférieur au fluide de transfert de chaleur initial, dans lequel le fluide de transfert de chaleur final est une composition l'invention.

L'invention concerne également l'utilisation de la composition selon l'invention, en tant que solvant.

L'invention concerne également l'utilisation de la composition selon l'invention, en tant qu'agent d'expansion.

L'invention concerne également l'utilisation de la composition selon l'invention, en tant qu'agent de propulsion, de préférence pour un aérosol.

L'invention concerne également l'utilisation de la composition selon l'invention, en tant qu'agent de nettoyage.

La présente invention permet de répondre aux besoins ressentis dans l'état de la technique. Elle fournit plus particulièrement de nouvelles compositions à bas GWP susceptibles d'être utilisées (entre autres) en tant que fluides de transfert de chaleur, notamment en remplacement des fluides de transfert de chaleur usuels.

En particulier, l'invention fournit des compositions azéotropiques ou quasi-azéotropiques.

Dans certains modes de réalisation, l'invention fournit des fluides de transfert de chaleur qui présentent de bonnes performances énergétiques par rapport à des fluides de transfert de chaleur usuels, en particulier le R404A et le R410A.

Dans certains modes de réalisation, les compositions selon l'invention présentent notamment une capacité volumétrique améliorée et / ou un coefficient de performance amélioré par rapport aux compositions de l'état de la technique.

Enfin, l'invention permet de surmonter partiellement ou totalement les problèmes traditionnellement associés à l'ammoniac et listés ci-dessus.

### BREVE DESCRIPTION DES FIGURES

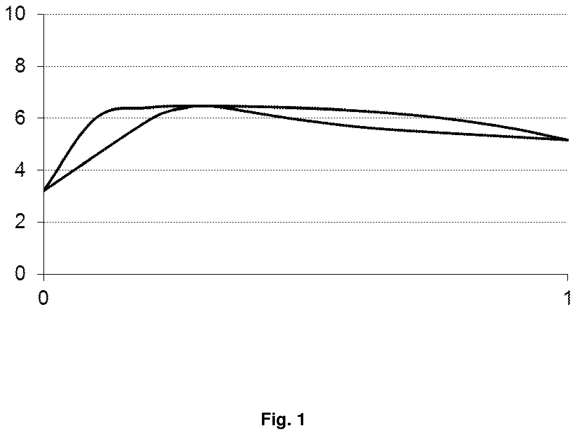

La **figure 1** représente les données d'équilibre vapeur / liquide à 5°C de mélanges binaires de HFO-1243zf et de NH₃, mettant en évidence l'existence d'un azéotrope et de quasi-azéotropes. La proportion de NH₃ entre 0 et 1 (=100%) est représentée en abscisse, et la pression en bar est représentée en ordonnée.

### DESCRIPTION DE MODES DE REALISATION DE L'INVENTION

L'invention est maintenant décrite plus en détail et de façon non limitative dans la description qui suit.

Le R404A désigne un mélange de 52 % de 1,1,1-trifluoroéthane, de 44 % de pentafluoroéthane et de 4 % de 1,1,1,2-tétrafluoroéthane ; et le R410A désigne un mélange de 50 % de difluorométhane et 50 % de pentafluoroéthane.

Sauf mention contraire, dans l'ensemble de la demande les proportions de composés indiquées sont données en pourcentages massiques.

Selon la présente demande, le potentiel de réchauffement global (GWP) est défini par rapport au dioxyde de carbone et par rapport à une durée de 100 ans, selon la méthode indiquée dans « The scientific assessment of ozone depletion, 2002, a report of the World Meteorological Association's Global Ozone Research and Monitoring Project ».

Par « composé de transfert de chaleur », respectivement « fluide de transfert de chaleur » (ou fluide frigorigène), on entend un composé, respectivement un fluide, susceptible d'absorber de la chaleur en s'évaporant à basse température et basse pression et de rejeter de la chaleur en se condensant à haute température et haute pression, dans un circuit de compression de vapeur. De manière générale, un fluide de transfert de chaleur peut comprendre un seul, deux, trois ou plus de trois composés de transfert de chaleur.

Par « composition de transfert de chaleur » on entend une composition comprenant un fluide de transfert de chaleur et éventuellement un ou plusieurs additifs qui ne sont pas des composés de transfert de chaleur pour l'application envisagée.

Les additifs peuvent notamment être choisis parmi les lubrifiants, les stabilisants, les tensioactifs, les agents traceurs, les agents fluorescents, les agents odorants et les agents de solubilisation.

De préférence, la composition comprend un fluide de transfert de chaleur et au moins un lubrifiant.

A titre de lubrifiants on peut notamment utiliser des huiles d'origine minérale, des huiles de silicone, des paraffines d'origine naturelle, des naphtènes, des paraffines synthétiques, des alkylbenzènes, des poly-alpha oléfines, des polyalkène glycols, des huiles fluorés et/ou chlorés type fluorés aromatiques de 1 à 4 groupes aromatiques, les perfluorocarbonés ou les perfluoropolyethers, des polyol esters et / ou des polyvinyléthers.

Les polyalkène glycols sont préférés.

En général, le polyalkylène glycol approprié pour être utilisée dans le cadre de l'invention comprend de 5 à 50 unités oxyalkylènes répétées, chacune contenant de 1 à 5 atomes de carbone.

Le polyalkylène glycol peut être linéaire ou ramifié. Il peut s'agir d'un homopolymère ou d'un copolymère de 2, 3 ou plus de 3 groupes choisis parmi les groupes oxyéthylène, oxypropylène, oxybutylène, oxypentylène et les combinaisons de ceux-ci.

Des polyalkylènes glycols préférés comprennent au moins 50 % de groupes oxypropylènes.

Des polyalkylènes glycols appropriés sont décrits dans le document US 4,971,712. D'autres polyalkylènes glycols appropriés sont les polyalkylènes glycols présentant des groupements hydroxyles à chaque extrémité, tels que décrits dans le document US 4,755,316. D'autres polyalkylènes glycols appropriés sont les polyalkylènes glycols présentant une extrémité hydroxyle coiffée. Le groupement hydroxyle peut être coiffé avec un groupement alkyle contenant de 1 à 10 atomes de carbone (et contenant éventuellement un ou plusieurs hétéroatomes tels que l'azote), ou un groupement fluoroalkyle contenant des hétéroatomes tels que l'azote, ou un groupement fluoroalkyle tel que décrit dans le document US 4,975,212, ou d'autres groupements similaires.

Lorsque les deux extrémités hydroxyles du polyalkylène glycol sont coiffées, on peut utiliser le même groupement extrémal ou une combinaison de deux groupements distincts.

Les groupements hydroxyles terminaux peuvent aussi être coiffés en formant un ester avec un acide carboxylique, tel que cela est décrit dans le document US 5,008,028. L'acide carboxylique peut également être fluoré.

Lorsque les deux extrémités du polyalkylène glycol sont coiffées, l'une ou l'autre peut l'être par un ester, ou bien une extrémité peut être coiffée par un ester et l'autre extrémité être libre ou être coiffée avec l'un des groupements alkyles, hétéroalkyles ou fluoroalkyles susmentionnés.

Des polyalkylènes glycols utilisables en tant qu'huiles de lubrification et disponibles dans le commerce sont par exemple les huiles Goodwrench de General Motors, MOPAR-56 de Daimler-Chrysler, Zerol de Shrieve Chemical Products, Planetelf PAG de Total et Daphne Hermetic PAG d'Itemitsu. D'autres polyalkylènes glycols appropriés sont fabriqués par Dow Chemical et Denso. On peut également citer les huiles fabriquées par Fuchs et notamment l'huile RENISO PG 68 / NH3.

Des huiles fluorés et / ou chlorés utilisables en tant qu'huiles de lubrification et disponibles dans le commerce sont par exemple les perfluorocarbons ou les perfluoropolyethers, notamment le Krytox de Dupont, Fomblin de Solvay Solexis, Demnum de Daikin, les trifluorochloroethylene oligomer,

La viscosité du polyalkylène glycol peut être par exemple de 1 à 1000 centistokes à 40°C, de préférence de 10 à 200 centistokes à 40°C et de manière plus particulièrement préférée de 30 à 80 centistokes à 40°C.

La viscosité est déterminée selon les grades ISO de viscosité, conformément à la norme ASTM D2422.

L'huile commercialisée par Denso sous le nom ND8, présentant une viscosité de 46 centistokes, est particulièrement appropriée.

Le ou les stabilisants, lorsqu'ils sont présents, représentent de préférence au plus 5 % en masse dans la composition de transfert de chaleur. Parmi les stabilisants, on peut citer notamment le nitrométhane, l'acide ascorbique, l'acide téréphtalique, les azoles tels que le tolutriazole ou le benzotriazole, les composés phénoliques tels que le tocophérol, l'hydroquinone, le t-butyl hydroquinone, le 2,6-di-ter-butyl-4-méthylphénol, les époxydes (alkyl éventuellement fluoré ou perfluoré ou alkényl ou aromatique) tels que les n-butylglycidyl éther, hexanedioldiglycidyl éther, allylglycidyl éther, butylphénylglycidyl éther, les phosphites, les phosphonates, les thiols et les lactones.

A titre d'agents traceurs (susceptibles d'être détectés) on peut citer les hydrofluorocarbures deutérés ou non, les hydrocarbures deutérés, les perfluorocarbures, les fluoroéthers, les composés bromés, les composés iodés, les alcools, les aldéhydes, les cétones, le protoxyde d'azote et les combinaisons de ceux-ci. L'agent traceur est différent du ou des composés de transfert de chaleur composant le fluide de transfert de chaleur.

A titre d'agents de solubilisation, on peut citer les hydrocarbures, le diméthyléther, les polyoxyalkylène éthers, les amides, les cétones, les nitriles, les chlorocarbures, les esters, les lactones, les aryl éthers, les fluoroéthers et les 1,1,1-trifluoroalcanes. L'agent de solubilisation est différent du ou des composés de transfert de chaleur composant le fluide de transfert de chaleur.

A titre d'agents fluorescents, on peut citer les naphthalimides, les perylènes, les coumarines, les anthracènes, les phénanthracènes, les xanthènes, les thioxanthènes, les naphthoxanhtènes, les fluorescéines et les dérivés et combinaisons de ceux-ci.

A titre d'agents odorants, on peut citer les alkylacrylates, les allylacrylates, les acides acryliques, les acrylesters, les alkyléthers, les alkylesters, les alcynes, les aldéhydes, les thiols, les thioéthers, les disulfures, les allylisothiocyanates, les acides alcanoïques, les amines, les norbornènes, les dérivés de norbornènes, le cyclohexène, les composés aromatiques hétérocycliques, l'ascaridole, l'o-méthoxy(méthyl)-phénol et les combinaisons de ceux-ci.

Le procédé de transfert de chaleur selon l'invention repose sur l'utilisation d'une installation comprenant un circuit de compression de vapeur qui contient un fluide de transfert de chaleur. Le procédé de transfert de chaleur peut être un procédé de chauffage ou de refroidissement d'un fluide ou d'un corps.

Le circuit de compression de vapeur contenant un fluide de transfert de chaleur comprend au moins un évaporateur, un compresseur, un condenseur et un détendeur, ainsi que des lignes de transport de fluide de transfert de chaleur entre ces éléments. L'évaporateur et le condenseur comprennent un échangeur de chaleur permettant un échange de chaleur entre le fluide de transfert de chaleur et un autre fluide ou corps.

A titre de compresseur, on peut utiliser notamment un compresseur centrifuge à un ou plusieurs étages ou un mini-compresseur centrifuge. Les compresseurs rotatifs, à piston ou à vis peuvent aussi être utilisés. Le compresseur peut être entraîné par un moteur électrique ou par une turbine à gaz (par exemple alimentée par les gaz d'échappement d'un véhicule, pour les applications mobiles) ou par engrenage.

L'installation peut comprendre une turbine pour générer de l'électricité (cycle de Rankine).

L'installation peut également éventuellement comprendre au moins un circuit de fluide caloporteur utilisé pour transmettre la chaleur (avec ou sans changement d'état) entre le circuit de fluide de transfert de chaleur et le fluide ou corps à chauffer ou refroidir.

L'installation peut également éventuellement comprendre deux circuits de compression de vapeur (ou plus), contenant des fluides de transfert de chaleur identiques ou distincts. Par exemple, les circuits de compression de vapeur peuvent être couplés entre eux.

Le circuit de compression de vapeur fonctionne selon un cycle classique de compression de vapeur. Le cycle comprend le changement d'état du fluide de transfert de chaleur d'une phase liquide (ou diphasique liquide / vapeur) vers une phase vapeur à une pression relativement faible, puis la compression du fluide en phase vapeur jusqu'à une pression relativement élevée, le changement d'état (condensation) du fluide de transfert de chaleur de la phase vapeur vers la phase liquide à une pression relativement élevée, et la réduction de la pression pour recommencer le cycle.

Dans le cas d'un procédé de refroidissement, de la chaleur issue du fluide ou du corps que l'on refroidit (directement ou indirectement, via un fluide caloporteur) est absorbée par le fluide de transfert de chaleur, lors de l'évaporation de ce dernier, et ce à une température relativement faible par rapport à l'environnement. Les procédés de refroidissement comprennent les procédés de climatisation (avec des installations mobiles, par exemple dans des véhicules, ou stationnaires), de réfrigération et de congélation ou de cryogénie.

Dans le cas d'un procédé de chauffage, de la chaleur est cédée (directement ou indirectement, via un fluide caloporteur) du fluide de transfert de chaleur, lors de la condensation de celui-ci, au fluide ou au corps que l'on chauffe, et ce à une température relativement élevée par rapport à l'environnement. L'installation permettant de mettre en oeuvre le transfert de chaleur est appelée dans ce cas « pompe à chaleur ».

Il est possible d'utiliser tout type d'échangeur de chaleur pour la mise en oeuvre des fluides de transfert de chaleur selon l'invention, et notamment des échangeurs de chaleur à co-courant ou, de préférence, des échangeurs de chaleur à contre-courant.

Les fluides de transfert de chaleur utilisés dans le cadre de la présente invention sont des compositions comprenant du HFO-1243zf et du NH₃.

Les fluides de transfert de chaleur selon l'invention peuvent comprendre un ou plusieurs composés de transfert de chaleur supplémentaires, outre le HFO-1243zf et le NH₃. Ces composés de transfert de chaleur supplémentaires peuvent être notamment choisis parmi les hydrocarbures, les hydrofluorocarbures, les éthers, les hydrofluoroéthers et les fluorooléfines.

Selon des modes de réalisation particuliers, les fluides de transfert de chaleur selon l'invention peuvent être des compositions ternaires (consistant en trois composés de transfert de chaleur) ou quaternaires (consistant en quatre composés de transfert de chaleur).

Toutefois les fluides de transfert de chaleur binaires, c'est-à-dire consistant en un mélange de HFO-1243zf et de NH₃, sont préférés.

Par composition binaire, on entend soit une composition consistant en HFO-1243zf et NH₃ ; soit une composition consistant essentiellement en HFO-1243zf et NH₃, mais pouvant contenir des impuretés à raison de moins de 1 %, de préférence moins de 0,5 %, de préférence moins de 0,1 %, de préférence moins de 0,05 % et de préférence moins de 0,01 %.

Selon des modes de réalisation particuliers, la proportion de HFO-1243zf dans le fluide de transfert de chaleur peut être : de 0,1 à 5 % ; ou de 5 à 10 % ; ou de 10 à 15 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 95 % ; ou de 95 à 99,9 %.

Selon des modes de réalisation particuliers, la proportion de NH₃ dans le fluide de transfert de chaleur peut être : de 0,1 à 5 % ; ou de 5 à 10 % ; ou de 10 à 15 % ; ou de 15 à 20 % ; ou de 20 à 25 % ; ou de 25 à 30 % ; ou de 30 à 35 % ; ou de 35 à 40 % ; ou de 40 à 45 % ; ou de 45 à 50 % ; ou de 50 à 55 % ; ou de 55 à 60 % ; ou de 60 à 65 % ; ou de 65 à 70 % ; ou de 70 à 75 % ; ou de 75 à 80 % ; ou de 80 à 85 % ; ou de 85 à 90 % ; ou de 90 à 95 % ; ou de 95 à 99,9 %.

Il peut être préférable de ne pas avoir une proportion de NH₃ trop élevée dans le mélange, dans le cadre d'une utilisation en tant que fluide de transfert de chaleur, afin d'éviter une hausse de température trop forte à la sortie du compresseur.

Parmi les compositions ci-dessus, certaines présentent l'avantage d'être azéotropiques ou quasi-azéotropiques. Par exemple, l'azéotrope pour le mélange binaire HFO-1243zf / NH₃ est obtenu pour une proportion de NH₃ d'environ 30 %, à une température de 5°C et à une pression de 6,4 bar environ.

On désigne par « quasi-azéotropiques » les compositions pour lesquelles, à température constante, la pression de saturation liquide et la pression de saturation vapeur sont quasiment identiques (la différence maximale de pression étant de 10 %, voire avantageusement de 5 %, par rapport à la pression de saturation liquide).

Pour des compositions « azéotropiques », à température constante, la différence maximale de pression est voisine de 0 %.

Ces fluides de transfert de chaleur présentent un avantage de facilité de mise en oeuvre. En l'absence de glissement de température significatif, il n'y a pas de changement significatif de la composition circulante, et pas non plus de changement significatif de la composition en cas de fuite.

En outre, on a trouvé que certaines compositions selon l'invention présentent des performances améliorées par rapport au R404A et / ou au R410A, en particulier pour les procédés de refroidissement à température modérée, c'est-à-dire ceux dans lesquels la température du fluide ou du corps refroidi est de -15°C à 15°C, de préférence de -10°C à 10°C, de manière plus particulièrement préférée de -5°C à 5°C (idéalement d'environ 0°C). A cet égard, les compositions pour lesquelles la proportion de NH₃ est de 10 à 70 % sont particulièrement préférées, notamment les compositions ayant une proportion de NH₃ de 20 à 50 %, de préférence de 20 à 35 %.

On a également trouvé que certaines compositions selon l'invention présentent des performances améliorées par rapport au R410A, en particulier pour les procédés de chauffage à température modérée, c'est-à-dire ceux dans lesquels la température du fluide ou du corps chauffé est de 30°C à 80°C, et de préférence de 35°C à 55°C, de manière plus particulièrement préférée de 40°C à 50°C (idéalement d'environ 45°C). A cet égard, les compositions pour lesquelles la proportion de NH₃ est de 15 à 70 % sont particulièrement préférées, notamment les compositions ayant une proportion de NH₃ de 20 à 35 %.

La demanderesse a remarqué que la composition comprenant du HFO-1243zf et NH₃ présentent une meilleure miscibilité avec les huiles que l'ammoniac ou HFO- 1243zf seul.

Dans les procédés de « refroidissement ou de chauffage à température modérée » mentionnés ci-dessus, la température d'entrée du fluide de transfert de chaleur à l'évaporateur est de préférence de -20°C à 10°C, notamment de -15°C à 5°C, de manière plus particulièrement préférée de -10°C à 0°C et par exemple d'environ -5°C ; et la température du début de la condensation du fluide de transfert de chaleur au condenseur est de préférence de 25°C à 90°C, notamment de 30°C à 70°C, de manière plus particulièrement préférée de 35°C à 55°C et par exemple d'environ 50°C. Ces procédés peuvent être des procédés de réfrigération, de climatisation ou de chauffage.

Certaines compositions sont également appropriées pour les procédés de chauffage à haute température, c'est-à-dire ceux dans lesquels la température du fluide ou du corps chauffé est supérieure à 90°C, par exemple supérieure ou égale à 100°C ou supérieure ou égale à 110°C, et de préférence inférieure ou égale à 120°C.

On a également trouvé que certaines compositions selon l'invention présentent des performances améliorées par rapport au R404A, en particulier pour les procédés de réfrigération à basse température, c'est-à-dire ceux dans lesquels la température du fluide ou du corps refroidi est de -40°C à -10°C, et de préférence de -35°C à -25°C, de manière plus particulièrement préférée de-30°C à -20°C (idéalement d'environ -25°C). A cet égard, les compositions pour lesquelles la proportion de NH₃ est de 15 à 35 % sont particulièrement préférées.

Dans les procédés de « réfrigération à basse température » mentionnés ci-dessus, la température d'entrée du fluide de transfert de chaleur à l'évaporateur est de préférence de -45°C à -15°C, notamment de -40°C à -20°C, de manière plus particulièrement préférée de -35°C à -25°C et par exemple d'environ -30°C ; et la température du début de la condensation du fluide de transfert de chaleur au condenseur est de préférence de 25°C à 80°C, notamment de 30°C à 60°C, de manière plus particulièrement préférée de 35°C à 55°C et par exemple d'environ 40°C.

Plus généralement, les compositions selon l'invention peuvent servir à remplacer tout fluide de transfert de chaleur dans toutes les applications de transfert de chaleur, et par exemple dans la climatisation automobile. Par exemple, les compositions selon l'invention peuvent servir à remplacer :
- le 1,1,1,2-tétrafluoroéthane (R134a) ;
- le 1,1-difluoroéthane (R152a) ;
- le 1,1,1,3,3-pentafluoropropane (R245fa) ;
- les mélanges de pentafluoroéthane (R125), de 1,1,1,2-tétrafluoroéthane (R134a) et d'isobutane (R600a), à savoir les R422 ;
- le chlorodifluorométhane (R22) ;
- le mélange de 51,2 % de chloropentafluoroéthane (R115) et de 48,8 % de chlorodifluorométhane (R22), à savoir le R502 ;
- tout hydrocarbure ;
- le mélange de 20 % de difluorométhane (R32), de 40 % de pentafluoroéthane (R125) et de 40 % de 1,1,1,2-tétrafluoroéthane (R134a), à savoir le R407A ;
- le mélange de 23 % de difluorométhane (R32), de 25 % de pentafluoroéthane (R125) et de 52 % de 1,1,1,2-tétrafluoroéthane (R134a), à savoir le R407C ;
- le mélange de 30 % de difluorométhane (R32), de 30 % de pentafluoroéthane (R125) et de 40 % de 1,1,1,2-tétrafluoroéthane (R134a), à savoir le R407F ;
- le R1234yf (2,3,3,3-tétrafluoropropène) ;
- le R1234ze (1,3,3,3-tétrafluoropropène).

Les compositions selon l'invention peuvent également être utiles en tant qu'agent d'expansion, agent de propulsion (par exemple pour un aérosol), agent de nettoyage ou solvant, outre leur utilisation en tant que fluides de transfert de chaleur.

En tant qu'agent de propulsion, les compositions selon l'invention peuvent être utilisées seules ou en combinaison avec des agents de propulsion connus. L'agent de propulsion comprend, de préférence consiste en, une composition selon l'invention. La substance active devant être projetée peut être mélangée avec l'agent de propulsion et des composés inertes, des solvants ou autres additifs, pour former une composition à projeter. De préférence, la composition à projeter est un aérosol.

En tant qu'agent d'expansion, les compositions selon l'invention peuvent être comprises dans une composition d'expansion, qui comprend de préférence un ou plusieurs autres composés susceptibles de réagir et de former une mousse ou structure cellulaire dans des conditions appropriées, comme cela est connu de l'homme du métier.

En particulier, l'invention propose un procédé de préparation d'un produit thermoplastique expansé comprenant d'abord la préparation d'une composition polymérique d'expansion. Typiquement, la composition polymérique d'expansion est préparée en plastifiant une résine polymère et en mélangeant les composés d'une composition d'agent d'expansion à une pression initiale. La plastification de la résine polymère peut être effectuée sous l'effet de la chaleur, en chauffant la résine polymère pour la ramollir suffisamment pour mélanger une composition d'agent d'expansion. Généralement, la température de plastification est proche de la température de transition vitreuse ou de la température de fusion pour les polymères cristallins.

D'autres utilisations des compositions selon l'invention comprennent les utilisations en tant que solvants, agents de nettoyage ou autres. On peut citer par exemple le dégraissage par la vapeur, le nettoyage de précision, le nettoyage de circuits électroniques, le nettoyage à sec, le nettoyage abrasif, les solvants pour le dépôt de lubrifiants et d'agents de libération, et d'autres traitements de solvant ou de surface.

### EXEMPLES

Les exemples suivants illustrent l'invention sans la limiter.

### Exemple 1 - compositions azéotropiques ou quasi-azéotropiques

Une cellule sous vide équipée d'un tube saphir est refroidie à 5°C avec un bain d'huile. Une fois l'équilibre thermique atteint, la cellule est chargée de HFO-1243zf, et la pression à laquelle l'équilibre est atteint est enregistrée. Une quantité de NH₃ est introduite dans la cellule, et le contenu est mélangé afin d'accélérer la mise à l'équilibre. A l'équilibre, une quantité minimale d'échantillon est prélevée de la phase gazeuse et de la phase liquide pour une analyse par chromatographie en phase gazeuse avec un détecteur thermique.

Les données d'équilibre obtenues avec différentes compositions de HFO-1243zf et de NH₃ sont représentées sur la **figure 1****.**

### Exemple 2 - étude des performances

L'équation RK-Soave est utilisée pour le calcul des densités, enthalpies, entropies et les données d'équilibre liquide vapeur des mélanges. L'utilisation de cette équation nécessite la connaissance des propriétés des corps purs utilisés dans les mélanges en question et aussi les coefficients d'interaction pour chaque binaire.

Les données disponibles pour chaque corps pur sont la température d'ébullition, la température critique et la pression critique, la courbe de pression en fonction de la température à partir du point d'ébullition jusqu'au point critique, les densités de liquide saturé et de vapeur saturée en fonction de la température.

Les données sur l'ammoniac sont publiées dans l'ASHRAE Handbook 2005 chapitre 20 et sont aussi disponible sous Refrop (Logiciel développé par NIST pour le calcul des propriétés des fluides frigorigènes).

Les données de la courbe température-pression du HFO-1243zf sont mesurées par la méthode statique. La température critique et la pression critique sont mesurées par un calorimètre C80 commercialisé par Setaram.

L'équation RK-Soave utilise des coefficients d'interaction binaire pour représenter le comportement des produits en mélanges. Les coefficients sont calculés en fonction des données expérimentales d'équilibre liquide vapeur.

Le coefficient de performance (COP) est défini comme étant la puissance utile fournie par le système sur la puissance apportée ou consommée par le système.

Dans les tableaux qui suivent, « T » désigne la température, « P » désigne la pression, « % CAP » désigne la capacité volumétrique du fluide par rapport au fluide de référence indiqué en première ligne, « %COP » désigne le coefficient de performance par rapport au fluide de référence indiqué en première ligne et « glide » désigne la variation de température au cours de l'évaporateur à pression constante.

Pour l'évaluation des performances énergétiques de la pompe à chaleur, on considère un système à compression équipé d'un évaporateur, condenseur et échangeur interne, d'un compresseur à vis et d'un détendeur.

Le système fonctionne avec 5°C de surchauffe. La température d'évaporation est de -5°C et la température de condensation est de 50°C.

Les résultats obtenus sont rassemblés dans le tableau 1 ci-dessous.

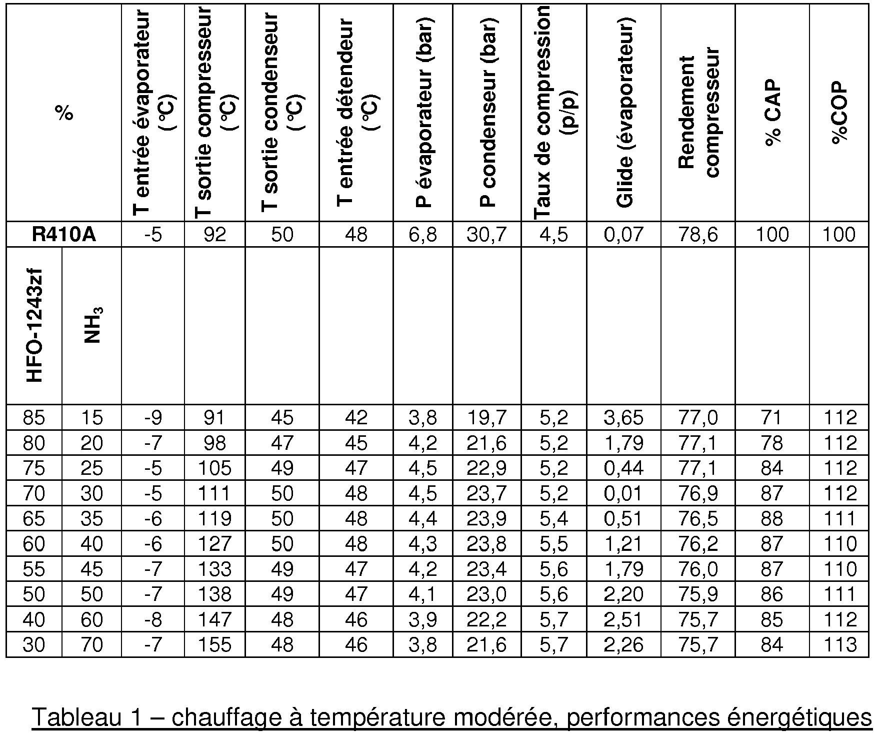

Pour l'évaluation des performances énergétiques de la réfrigération à température modérée, on considère un système à compression équipé d'un évaporateur, condenseur et échangeur interne, d'un compresseur à vis et d'un détendeur.

Le système fonctionne avec 5°C de surchauffe. La température d'évaporation est de -5°C et la température de condensation est de 50°C.

Les résultats obtenus sont rassemblés dans le tableau 2 ci-dessous.

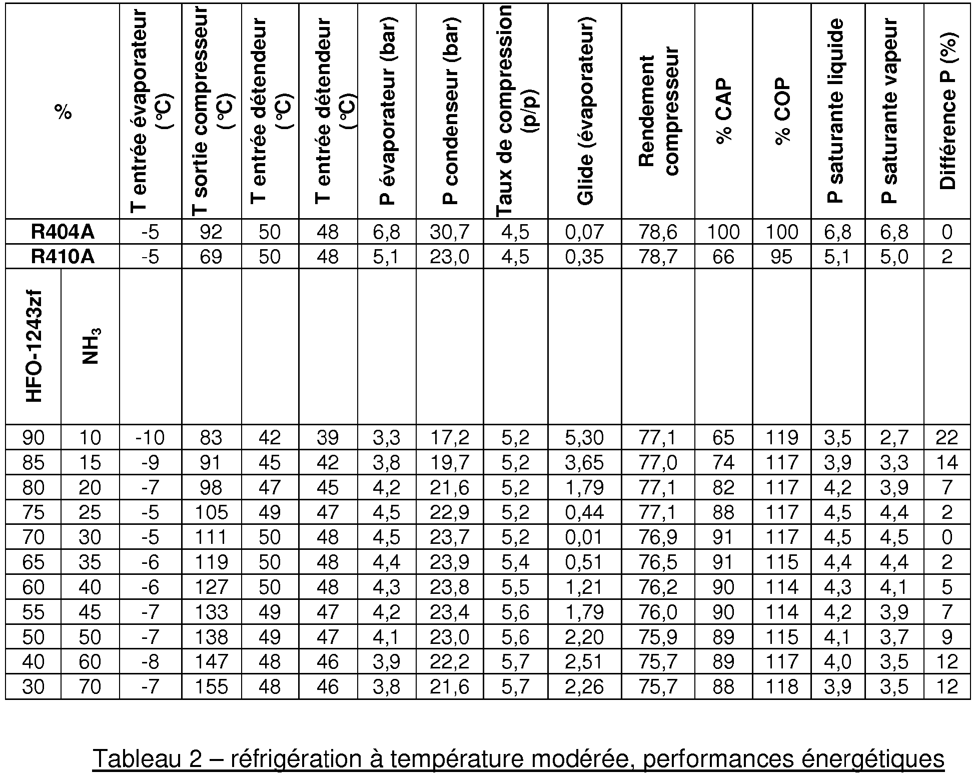

Pour l'évaluation des performances énergétiques dans un procédé de réfrigération à basse température, on considère un système à compression équipé d'un évaporateur, condenseur et échangeur interne, d'un compresseur à vis et d'un détendeur.

Le système fonctionne avec 15°C de surchauffe. La température d'évaporation est de -30°C et la température de condensation est de 40°C.

Les résultats obtenus sont rassemblés dans le tableau 3 ci-dessous.

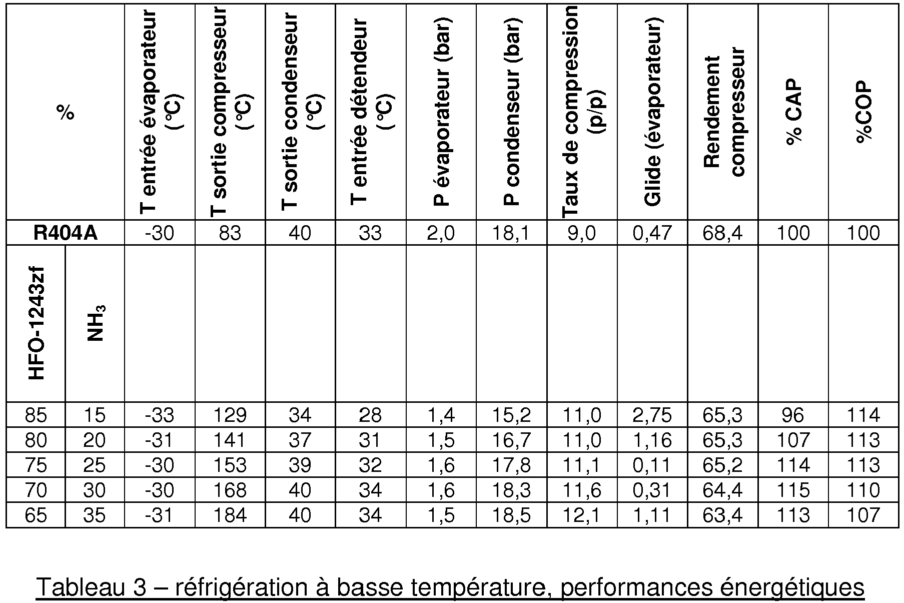

## Revendications

1. Composition comprenant du 3,3,3-trifluoropropène et de l'ammoniac.

2. Composition selon la revendication 1, dans laquelle le 3,3,3-trifluoropropène et l'ammoniac représentent au moins 95 %, de préférence au moins 99 %, de manière plus particulièrement préférée au moins 99,9 % de la composition.

3. Composition selon la revendication 1 ou 2, comprenant :
- de 10 à 70 % d'ammoniac et de 30 à 90 % de 3,3,3-trifluoropropène ;
- de préférence de 20 à 50 % d'ammoniac et de 50 à 80 % de 3,3,3-trifluoropropène, ou de 15 à 35 % d'ammoniac et de 65 à 85 % de 3,3,3-trifluoropropène ;
- de manière plus particulièrement préférée de 20 à 35 % d'ammoniac et de 65 à 80 % de 3,3,3-trifluoropropène ; et
- de manière tout particulièrement préférée de 25 à 35 % d'ammoniac et de 65 à 75 % de 3,3,3-trifluoropropène.

4. Utilisation de la composition selon l'une des revendications 1 à 3, en tant que fluide de transfert de chaleur.

5. Utilisation selon la revendication 4, dans laquelle la composition est quasi-azéotropique, de préférence est azéotropique.

6. Composition de transfert de chaleur, comprenant la composition selon l'une des revendications 1 à 3 ainsi qu'un ou plusieurs additifs choisis parmi les lubrifiants, les stabilisants, les tensioactifs, les agents traceurs, les agents fluorescents, les agents odorants, les agents de solubilisation et leurs mélanges.

7. Installation de transfert de chaleur comprenant un circuit de compression de vapeur contenant une composition selon l'une des revendications 1 à 3 en tant que fluide de transfert de chaleur ou contenant une composition de transfert de chaleur selon la revendication 6.

8. Installation selon la revendication 7, choisie parmi les installations mobiles ou stationnaires de chauffage par pompe à chaleur, de climatisation, de réfrigération, de congélation et les cycles de Rankine, et notamment parmi les installations de climatisation automobile.

9. Procédé de chauffage ou de refroidissement d'un fluide ou d'un corps au moyen d'un circuit de compression de vapeur contenant un fluide de transfert de chaleur, ledit procédé comprenant successivement l'évaporation du fluide de transfert de chaleur, la compression du fluide de transfert de chaleur, la condensation du fluide de chaleur et la détente du fluide de transfert de chaleur, dans lequel le fluide de transfert de chaleur est une composition selon l'une des revendications 1 à 3.

10. Procédé selon la revendication 9, qui est un procédé de refroidissement d'un fluide ou d'un corps, dans lequel la température du fluide ou du corps refroidi est de -15°C à 15°C, et de préférence de -10°C à 10°C, de manière plus particulièrement préférée de -5°C à 5°C ; ou qui est un procédé de chauffage d'un fluide ou d'un corps, dans lequel la température du fluide ou du corps chauffé est de 30°C à 90°C, et de préférence de 35°C à 60°C, de manière plus particulièrement préférée de 40°C à 50°C.

11. Procédé selon la revendication 10, qui est un procédé de refroidissement d'un fluide ou d'un corps, dans lequel la température du fluide ou du corps refroidi est de -40°C à -10°C, et de préférence de -35°C à -25°C, de manière plus particulièrement préférée de -30°C à -20°C.

12. Procédé selon la revendication 9, qui est un procédé de chauffage d'un fluide ou d'un corps, dans lequel la température du fluide ou du corps chauffé est supérieure à 90°C, de préférence supérieure ou égale à 100°C ou supérieure ou égale à 110°C, et de préférence inférieure ou égale à 120°C.

13. Procédé de réduction de l'impact environnemental d'une installation de transfert de chaleur comprenant un circuit de compression de vapeur contenant un fluide de transfert de chaleur initial, ledit procédé comprenant une étape de remplacement du fluide de transfert de chaleur initial dans le circuit de compression de vapeur par un fluide de transfert final, le fluide de transfert final présentant un GWP inférieur au fluide de transfert de chaleur initial, dans lequel le fluide de transfert de chaleur final est une composition selon l'une des revendications 1 à 3.

14. Utilisation de la composition selon l'une des revendications 1 à 3, en tant que solvant.

15. Utilisation de la composition selon l'une des revendications 1 à 3, en tant qu'agent d'expansion.

16. Utilisation de la composition selon l'une des revendications 1 à 3, en tant qu'agent de propulsion, de préférence pour un aérosol.

17. Utilisation de la composition selon l'une des revendications 1 à 3, en tant qu'agent de nettoyage.

## Patentansprüche

1. Zusammensetzung, umfassend 3,3,3-Trifluorpropen und Ammoniak.

2. Zusammensetzung nach Anspruch 1, wobei das 3,3,3-Trifluorpropen und das Ammoniak mindestens 95%, vorzugsweise mindestens 99% und weiter bevorzugt mindestens 99,9% der Zusammensetzung ausmachen.

3. Zusammensetzung nach Anspruch 1 oder 2, umfassend:
- 10 bis 70% Ammoniak und 30 bis 90% 3,3,3-Trifluorpropen,
- vorzugsweise 20 bis 50% Ammoniak und 50 bis 80% 3,3,3-Trifluorpropen oder 15 bis 35% Ammoniak und 65 bis 85% 3,3,3-Trifluorpropen;
- weiter bevorzugt 20 bis 35% Ammoniak und 65 bis 80% 3,3,3-Trifluorpropen und
- ganz besonders bevorzugt 25 bis 35% Ammoniak und 65 bis 75% 3,3,3-Trifluorpropen.

4. Verwendung der Zusammensetzung nach einem der Ansprüche 1 bis 3 als Wärmeübertragungsfluid.

5. Verwendung nach Anspruch 4, wobei die Zusammensetzung quasi-azeotrop und vorzugsweise azeotrop ist.

6. Wärmeübertragungszusamnensetzung, umfassend die Zusammensetzung nach einem der Ansprüche 1 bis 3 sowie ein oder mehrere Additive, die aus Schmiermitteln, Stabilisatoren, Tensiden, Tracern, Fluoreszenzmitteln, Odorantien, Solubilisatoren und Mischungen davon ausgewählt sind.

7. Wärmeübertragungsanlage, umfassend einen Dampfverdichtungskreislauf, der eine Zusammensetzung nach einem der Ansprüche 1 bis 3 als Wärme-übertragungsfluid enthält oder eine Wärmeüber-tragungszusammensetzung nach Anspruch 6 enthält.

8. Anlage nach Anspruch 7, ausgewählt aus mobilen oder stationären Wärmepumpenheizanlagen, Klimaanlagen, Kühlanlage, Gefrieranlagen und Rankine-Zyklen und insbesondere aus Auto-Klimaanlagen.

9. Verfahren zum Erwärmen oder Abkühlen eines Fluids oder eines Körpers mittels eines Dampfverdichtungskreislaufs, der ein Wärmeübertragungs-fluid enthält, bei dem man nacheinander das Wärmeübertragungsfluid verdampft, das Wärmeübertragungs-fluid verdichtet, das Wärmefluid kondensiert und das Wärmeübertragungsfluid entspannt, wobei es sich bei dem Wärmeübertragungsfluid um eine Zusammensetzung nach einem der Ansprüche 1 bis 3 handelt.

10. Verfahren nach Anspruch 9, bei dem es sich um ein Verfahren zum Abkühlen eines Fluids oder eines Körpers handelt, bei dem die Temperatur des abgekühlten Fluids oder Körpers -15°C bis 15°C, vorzugsweise -10°C bis 10°C und weiter bevorzugt -5°C bis 5°C beträgt; oder bei dem es sich um ein Verfahren zum Erwärmen eines Fluids oder eines Körpers handelt, bei dem die Temperatur des erwärmten Fluids oder Körpers 30°C bis 90°C, vorzugsweise 35°C bis 60°C und weiter bevorzugt 40°C bis 50°C beiträgt.

11. Verfahren nach Anspruch 10, bei dem es sich um ein Verfahren zum Abkühlen eines Fluids oder eines Körpers handelt, bei dem die Temperatur des abgekühlten Fluids oder Körpers -40°C bis -10°C, vorzugsweise -35°C bis -25°C und weiter bevorzugt-30°C bis -20°C beträgt.

12. Verfahren nach Anspruch 9, bei dem es sich um ein Verfahren zum Erwärmen eines Fluids oder eines Körpers handelt, bei dem die Temperatur des erwärmten Fluids oder Körpers größer als 90°C, vorzugsweise größer gleich 100°C oder größer gleich 110°C und vorzugsweise kleiner gleich 120°C ist.

13. Verfahren zur Verringerung der Umweltbelastung durch eine Wärmeübertragungsanlage mit einem Dampfverdichtungskreislauf, der ein anfängliches Wärmeübertragungsfluid enthält, bei dem man das anfängliche Wärmeübertragungsfluid in dem Dampfverdichtungskreislauf durch ein letztendliches Übertragungsfluid ersetzt, wobei das letztendliche Übertragungsfluid ein kleineres GWP als das anfängliche Wärmeübertragungsfluid aufweist, wobei es sich bei dem letztendlichen Wärmeübertragungsfluid um eine Zusammensetzung nach einem der Ansprüche 1 bis 3 handelt.

14. Verwendung der Zusammensetzung nach einem der Ansprüche 1 bis 3 als Lösungsmittel.

15. Verwendung der Zusammensetzung nach einem der Ansprüche 1 bis 3 als Blähmittel.

16. Verwendung der Zusammensetzung nach einem der Ansprüche 1 bis 3 als Treibmittel, vorzugsweise für ein Aerosol.

17. Verwendung der Zusammensetzung nach einem der Ansprüche 1 bis 3 als Reinigungsmittel.

## Claims

1. Composition comprising 3,3,3-trifluoropropene and ammonia.

2. Composition according to Claim 1, in which 3,3,3-trifluoropropene and ammonia represent at least 95%, preferably at least 99% and more particularly preferably at least 99.9% of the composition.

3. Composition according to Claim 1 or 2, comprising:
- from 10% to 70% of ammonia and from 30% to 90% of 3,3,3-trifluoropropene;
- preferably from 20% to 50% of ammonia and from 50% to 80% of 3,3,3-trifluoropropene, or from 15% to 35% of ammonia and from 65% to 85% of 3,3,3-trifluoropropene;
- more particularly preferably from 20% to 35% of ammonia and from 65% to 80% of 3,3,3-trifluoropropene; and
- most particularly preferably from 25% to 35% of ammonia and from 65% to 75% of 3,3,3-trifluoropropene.

4. Use of the composition according to one of Claims 1 to 3, as a heat-transfer fluid.

5. Use according to Claim 4, in which the composition is quasi-azeotropic, and preferably is azeotropic.

6. Heat-transfer composition, comprising the composition according to one of Claims 1 to 3 and also one or more additives chosen from lubricants, stabilizers, surfactants, tracers, fluorescers, odorant agents and solubilizers, and mixtures thereof.

7. Heat-transfer installation comprising a vapor compression circuit containing a composition according to one of Claims 1 to 3 as heat-transfer fluid or containing a heat-transfer composition according to Claim 6.

8. Installation according to Claim 7, chosen from mobile or stationary heat-pump heating, air-conditioning, refrigeration, freezing and Rankine-cycle installations, and especially from motor vehicle air-conditioning installations.

9. Process for heating or cooling a fluid or a body by means of a vapor compression circuit containing a heat-transfer fluid, said process successively comprising evaporation of the heat-transfer fluid, compression of the heat-transfer fluid, condensation of the heat fluid and depressurization of the heat-transfer fluid, in which the heat-transfer fluid is a composition according to one of Claims 1 to 3.

10. Process according to Claim 9, which is a process for cooling a fluid or a body, in which the temperature of the cooled fluid or body is from -15°C to 15°C, preferably from-10°C to 10°C and more particularly preferably from -5°C to 5°C; or which is a process for heating a fluid or a body, in which the temperature of the heated fluid or body is from 30°C to 90°C, preferably from 35°C to 60°C and more particularly preferably from 40°C to 50°C.

11. Process according to Claim 10, which is a process for cooling a fluid or a body, in which the temperature of the cooled fluid or body is from -40°C to -10°C, preferably from -35°C to -25°C and more particularly preferably from -30°C to -20°C.

12. Process according to Claim 9, which is a process for heating a fluid or a body, in which the temperature of the heated fluid or body is greater than 90°C, preferably greater than or equal to 100°C or greater than or equal to 110°C, and preferably less than or equal to 120°C.

13. Process for reducing the environmental impact of a heat-transfer installation comprising a vapor compression circuit containing an initial heat-transfer fluid, said process comprising a step of replacing the initial heat-transfer fluid in the vapor compression circuit with a final heat-transfer fluid, the final heat-transfer fluid having a GWP less than the initial heat-transfer fluid, in which the final heat-transfer fluid is a composition according to one of Claims 1 to 3.

14. Use of the composition according to one of Claims 1 to 3, as a solvent .

15. Use of the composition according to one of Claims 1 to 3, as an expander.

16. Use of the composition according to one of Claims 1 to 3, as a propellant, preferably for an aerosol.

17. Use of the composition according to one of Claims 1 to 3, as a cleaning agent.
